# EUROPÄISCHE PATENTANMELDUNG

(11) **EP 0 930 342 A2**
(43) Veröffentlichungstag der Anmeldung: **21.07.1999**
(21) Anmeldenummer: 99100229.6
(22) Anmeldetag: 08.01.1999
(51) Int. Cl.: C08L 83/08, C08G 77/392, C08G 77/388, C08F 283/12

(54) **Aminofunktionelle Polyorganosiloxane, deren Herstellung und Verwendung**

(30) Priorität: 21.01.1998 DE 19802069
(71) Anmelder: HÜLS AKTIENGESELLSCHAFT, 45764 Marl (DE)
(72) Erfinder: Messner, Michael, 86420 Diedorf (DE); Rautschek, Holger, Dr., 01612 Nünchritz (DE)
(74) Vertreter: Olbricht, Gerhard, Dr.

(57) **Zusammenfassung**

Die Erfindung betrifft neue wasserlösliche, bzw. leicht dispergierbare, aminofunktionelle Polyorganosiloxane, die erhalten werden durch radikalische Polymerisation von Amino- bzw. Ammoniumgruppen enthaltenden Vinylverbindungen an mindestens eine Mercaptogruppe aufweisende Polyorganosiloxane und als Textilveredlungsmittel einsetzbar sind.

## Beschreibung

Die Erfindung betrifft neue wasserlösliche, bzw. leicht dispergierbare, aminofunktionelle Polyorganosiloxane, die erhalten werden durch radikalische Polymerisation von Amino- bzw. Ammoniumgruppen enthaltenden Vinylverbindungen an mindestens eine Mercaptogruppe aufweisende Polyorganosiloxane und als Textilveredlungsmittel einsetzbar sind.

Aus der Literatur sind Amino- oder Ammoniumgruppen aufweisende Polyorganosiloxane schon lange bekannt und es wurden verschiedenste Wege zu ihrer Herstellung beschrieben. Als Beispiel sei hier auf die von E. L. Morehouse in der DE-OS 14 93 327 beschriebene Synthese tertiäre Aminogruppen aufweisender Organopolysiloxane verwiesen,bei der die gewünschten Verbindungen durch Hydrosilylierung von Methylwasserstoffsiloxan erhalten werden.

Wie z. B. aus US 4 098 701 bekannt ist, eignen sich Aminogruppen tragende Polysiloxane zur Ausrüstung von Fasermaterial, um diesen die gewünschten Eigenschaften, wie z. B. einen weichen, fließenden Griff und Knitterbeständigkeit, zu verleihen. Deshalb werden diese Verbindungen üblicherweise als Textilausrüstungsmittel eingesetzt.

In US 4 098 701 werden Polyorganosiloxane beschrieben, die als aminofunktionelle Gruppe die Gruppierung -(CH₂)₃NHCH₂CH₂NH₂ enthalten. Diese Gruppierung verursacht jedoch eine starke Neigung zur Thermovergilbung, einer Verfarbung, die durch erhöhte Temperatur verstärkt wird. Zur Behebung dieses Problems wurden z. B. in der EP-A 0 692 567 stickstoffhaltige Organopolysiloxane mit Seitenketten, die keine primären Aminogruppen enthalten, vorgeschlagen. Weiterhin wird in EP-A 0 441 530 der Ersatz der Aminoethylaminopropylgruppe durch die N-Methyl-piperazinogruppe bzw. in der EP-A 0 342 830 die Umsetzung von Aminoethylaminopropylgruppen enthaltenden Siloxanen mit Butyrolacton empfohlen.

Auch die Synthese modifizierter Siloxane, beispielsweise durch Propfung von ethylenisch ungesättigten Verbindungen, wie z. B. Styrol oder Methylmethacrylat, auf Mercaptogruppen enthaltende Polydimethylsiloxane (u. a. DE 17 95 389 und US 4 071 577) ist seit langem bekannt. WO 94/14875 beschreibt die Synthese von Pfropfpolymeren auf der Basis von Perfluoralkylacrylaten und Mercapto-Siloxanen und deren Anwendung als wasser- und ölabweisende Ausrüstung für Textilien.

Des weiteren ist in US 4 985 155 ein Textilveredlungsmittel auf Siliconbasis beschrieben, welches durch Polymerisation von Mercaptosiloxanen und Alkylacrylaten bzw. -methacrylaten hergestellt wird, wobei bis zu dreißig Prozent der Acrylate durch andere Acrylsäurederivate wie Acrylamide oder auch Dimethylaminopropylacrylat ersetzt sein können. Diese wasserunlöslichen Produkte, welche nur eine geringe Kationogenität aufweisen, eignen sich für besonders weiche Beschichtungen von Textilien, die wasser- und winddicht sein sollen, wie Sport- oder Skibekleidung, Regenmäntel, Regenschirme, Zelte, Autoverdecks. Ein Anteil von mindestens 70 Gew.-% an Alkylacrylaten bzw. - methacrylaten ist jedoch zur Erzielung einer weichen Beschichtung unbedingt erforderlich. Ein Anteil unterhalb 70 Gew.-% wurde die Beschichtung derart beeinträchtigen, daß die Anbindung an die Faseroberfläche gestört wird und keine befriedigenden mechanischen Eigenschaften des Beschichtungsfilmes mehr erhalten werden. Um eine effektive Beschichtung zu erhalten wird zur Behandlung eine vernetzend wirkende Verbindung (z. B. Polyisocyanate) zugesetzt. Der Gewichtsanteil der Beschichtung am Gesamtgewicht des beschichteten Gewebes liegt üblicherweise bei mindestens 20 Gew.-%, teilweise aber auch erheblich darüber.

Bei der erwähnten Beschichtung von textilen Flächengebilden wird der zu beschichtende Stoff mit einer geschlossenen, möglichst porenfreien Schicht eines wasserabweisenden organischen Überzugs versehen, um z. B. für Regenbekleidung neben einer Oberflächenhydrophobierung auch Durchschlagsfestigkeit gegen Regen und eine Wasserdruckbeständigkeit zu erreichen. Das Beschichtungsmittel kann hierbei entweder einseitig durch Vorrichtungen wie z. B. eine Rakel oder beidseitig z. B. durch einen Foulard aufgetragen werden. Die zur Beschichtung verwendeten Verbindungen können hierbei sowohl als wasserhaltige Pasten oder in einem organischen Lösungsmittel gelöst vorliegen. Die Anbindung der Beschichtungsmassen an die Oberfläche des Textils erfolgt dabei durch zugesetzte organische Vernetzer, wie z. B. Isocyanate, Methylolgruppen haltige oder Epoxidgruppen haltige Verbindungen. Ziel bei diesem Prozess ist es den Beschichtungsvorgang so zu gestalten, daß eine möglichst hohe mechanische Belastbarkeit des Films gegeben ist, ohne daß dies zu einer zu großen Versteifung des beschichteten Textils führt. Dies wird durch eine Vorhydrophobierung des zu beschichtenden Textils erreicht, die ein zu tiefes Eindringen der Beschichtungsmasse in das Gewebe und damit das verkleben der Fasern verhindert

Bei der Hochveredelung von Textilien wird mit erheblich weniger Mengen an Veredlungsmitteln gearbeitet. Vor einer Verwendung in der Textilausrüstung müssen die Siloxane jedoch zuerst mit teilweise erheblichem Aufwand in wäßrige Emulsionen überführt werden. Die üblichen Emulsionsverfahren, wie beispielsweise Scheremulgierung oder Emulgierung durch Phaseninversion, zur Herstellung brauchbarer Emulsionen sind technisch sehr aufwendig und stellen immer einen Kompromiß zwischen der für eine kommerzielle Verwertung notwendigen Stabilität der Emulsionen und der Verschlechterung der anwendungstechnischen Eigenschaften, wie z. B. Weichgriff oder Reibechtheit des behandelten textilen Substrats, dar. Dies wird verursacht durch den für die Emulsionsherstellung notwendigen Zusatz von Tensiden, Cotensiden bzw. Hydrotropika. Ein weiterer Nachteil dieser Zubereitungsform ist die Tatsache, daß Silikonemulsionen nur bis zu einer gewissen Obergrenze aufkonzentrierbar sind, ohne daß sich Phasenseperationen zeigen oder die Emulsion zu einer nur schwer weiterverarbeitbaren Paste erstarrt. Diese Nachteile haben dazu geführt, daß die aminofunktionellen Siloxane bislang fast ausschließlich durch Klotzen auf die textilen Substrate aufgebracht werden.

Ein Großteil der in der Hochveredelung eingesetzten Weichmacher für textile Substrate wird jedoch im Ausziehverfahren aufgebracht. Um einen Weichmacher hier einsetzen zu können muß dieser neben einer hohen mechanischen Stabilität in der Flotte auch eine gute Stabilität gegenüber pH-Wert-Schwankungen, leicht- bzw. selbstdispergierende Eigenschaften sowie ein gutes Ausziehverhalten und Substantivität aufweisen.

Die Aufgabe der Erfindung bestand nun darin, aminofunktionelle Polyorganosiloxane bereitzustellen, die wasserlöslich bzw. leicht emulgierbar oder selbstemulgierend sind und welche ökonomisch, insbesondere unter Verwendung von kommerziell verfügbaren Ausgangstoffen, herstellbar sind. Die aminofunktionellen Polyorganosiloxane sollen in wäßrigen Formulierungen, als Textilveredlungsmittel oder Tenside einsetzbar sein.

Überraschenderweise wurde gefunden, daß durch Pfropfcopolymerisation von ethylenisch ungesättigten, Aminogruppen aufweisenden Monomeren auf Mercaptosiloxane sehr leicht emulgierbare bis hin zu selbstemulgierenden aminofunktionelle Polyorganosiloxane erhalten werden, die damit ausgerüsteten Textilien einen hervorragenden Weichgriff verleihen.

Gegenstand der Erfindung sind aminofunktionelle Polyorganosiloxane der allgemeinen Formel (I) 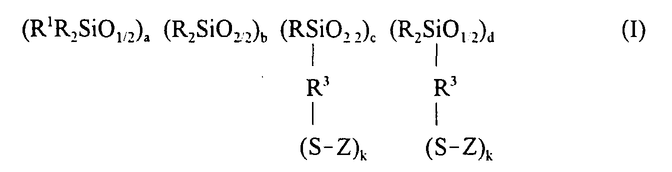 worin R¹ unabhängig voneinander entweder Alkyl-, Aryl-, Alkoxy- oder Hydroxyreste, R unabhängig voneinander, gleiche oder verschiedene, substituierte oder unsubstituierte Alkyl-, Aryl- oder Alkylarylreste sowie R³ unabhängig voneinander ein linearer oder verzweigter, substituierter oder unsubstituierter, durch Heterogruppierungen unterbrochener oder nicht unterbrochener Alkylenrest mit 2 bis 10 Kohlenstoffatomen bedeutet, b Werte von 50 bis 1.000, bevorzugt 90 und 800 und c Werte von 1 bis 100 sowie a und d jeweils Werte von 0 bis 2 annehmen, mit der Maßgabe, daß die Summe aus (a+d) maximal 2 ist, und k entweder 1 oder 2 ist,
und Z der Struktur der Formel (II)

(M1) (M2) (M3) H (II)

entspricht, wobei (M1) eine Struktureinheit, ausgewählt aus 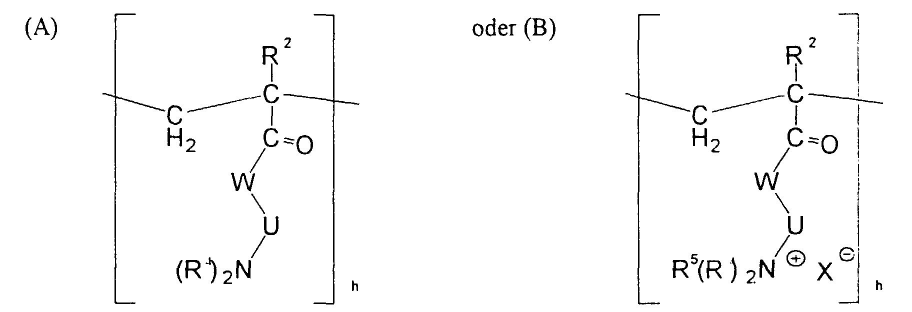 darstellt, worin W eine NR²- oder -O-Gruppierung, U eine lineare oder verzweigte Alkylengruppe mit 2 bis 10 Kohlenstoffatomen, X^{⊖} ein in wäßriger Lösung stabiles, negativ geladenes Ion, R² unabhängig voneinander Alkylreste mit 1 bis 4 Kohlenstoffatomen oder Wasserstoff, R⁴ unabhängig voneinander substituierte oder unsubstituierte Alkyl-, Aryl- oder Alkylarylreste mit 1 bis 10 Kohlenstoffatomen sowie R⁵ unabhängig voneinander substituierte oder unsubstituierte, gesättigte oder ungesättigte Alkyl-, Aryl- oder Alkylarylreste mit 1 bis 10 Kohlenstoffatomen oder Wasserstoff darstellen, und h Werte zwischen 0 und 250, bevorzugt bis 150, besonders bevorzugt bis 100, annimmt,
(M2) eine Struktureinheit, ausgewählt aus 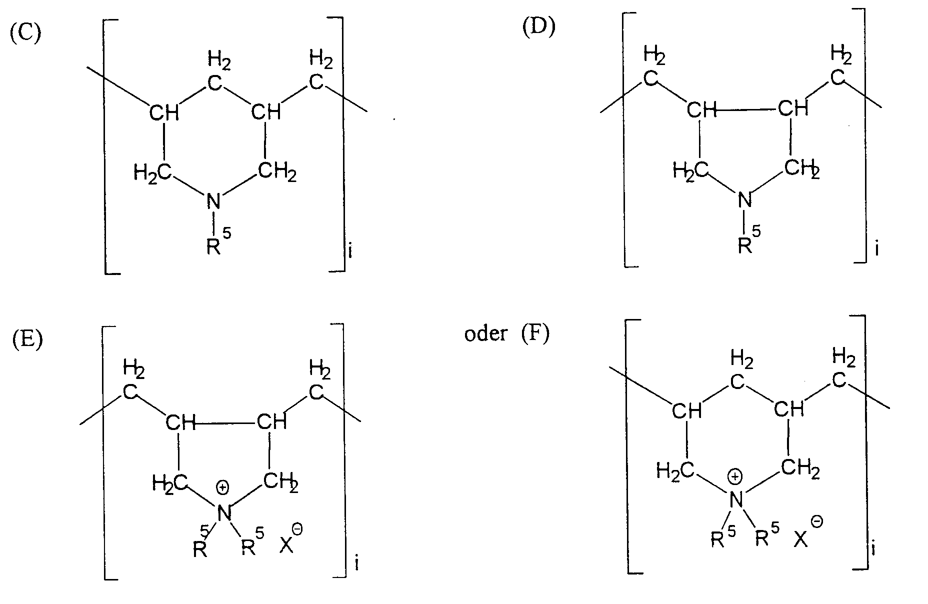 darstellt, wobei R⁵ die oben angegebene Bedeutung aufweist und i Werte zwischen 0 und 400, bevorzugt bis 300, besonders bevorzugt bis 200, annimmt,
sowie (M3) eine Struktureinheit, ausgewählt aus 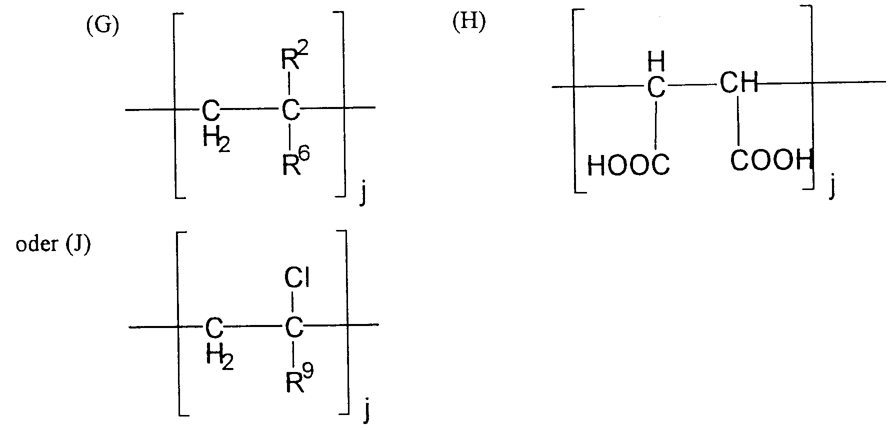 darstellt, wobei R⁶ eine ―COOR⁷- oder ―CONR²―R⁸-Gruppierung darstellt, in welcher R⁷ eine linearen oder verzweigten Alkylrest mit 1 bis 18 Kohlenstoffatomen, Hydroxyalkylreste mit 2 bis 5 Kohlenstoffatomen, Alkoxypolyethylenglykolreste mit Molgewichten von 73 bis 1.000 g/mol oder eine Hydroxygruppe darstellt und R⁸ ein Hydroxymethylen- oder -methylenetherrest, ein 2-Methylpropansulfonsäurerest oder Wasserstoff bedeutet und R⁹ Wasserstoff oder Chlor darstellt sowie j Werte zwischen 0 und 200, bevorzugt bis 150, besonders bevorzugt bis 100, annimmt. mit der Maßgabe, daß die Summe (h+i) immer größer (2·j), bevorzugt größer (2,3·j), ist.

In der Verbindung der allgemeinen Formel (I) sind als Reste R Methyl- und/oder Ethylreste sowie als Rest R¹ Methyl-, Ethyl-, Hydroxy-, Methoxy- und/oder Ethoxyreste bevorzugt. Der Rest R³ in der allgemeinen Formel (I) sollte keine leicht hydrolysierbaren Gruppen, wie beispielsweise Estergruppierungen, sowie keine ungesättigten und/oder keine Protonen abspaltenden Gruppierungen aufweisen. Beispielsweise können als Rest R³ mit Hydroxy-, Halogen- oder Alkoxygruppen substituierter Alkylenreste mit 1 bis 10 Kohlenstoffatomen, wie Propylen-, 2-Methylpropylen Butylen-, Decanylengruppierungen, gebunden sein. Weiterhin kann der Rest R³ einen Alkylenrest mit 1 bis 10 Kohlenstoffatomen darstellen, der auch durch ein oder zwei Heterogruppierungen, ausgewählt aus Ether-, Thioether-, Amino-, Carboxyl-, Carbamid- und/oder Sulfonamidgruppen, unterbrochen sein kann, Beispiel dafür ist die 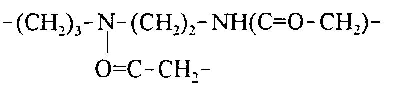 Gruppierung.

Die erfindungsgemäßen aminofunktionellen Polyorganosiloxane können hergestellt werden durch Umsetzung von einer mindestens eine Mercaptogruppe aufweisenden Verbindung der allgemeinen Formel (I), wobei Z Wasserstoff bedeutet, mit den, die Struktureinheiten (M1), (M2) und/oder (M3) bildenden, entsprechenden Verbindungen M1, M2 und M3 in Gegenwart eines Initiators. Die Umsetzung erfolgt üblicherweise durch radikalische Pfropfpolymerisation auf die Mercapogruppe.

Übliche Beispiele für die Verbindung M1 sind Aminoalkylacrylate und/oder -methacrylate, Arninoalkylacrylamide und/oder Aminoalkylmethacrylamide und/oder deren Ammoniumverbindungen, für die Verbindung M2 können Diallylamine und Diallylammoniumverbindungen sowie für die Verbindung M3 Alkylacrylate, Alkylmethacrylate, methylolierte Acryl- und Methacrylamide und deren Alkylether, Acylsäuren und Methacrylsäuren, Maleinsäure oder deren Anhydrid, Fumarsäure. Itaconsäure, 2-Acrylamido-2-methylpropansulfonsäure, Vinylacetat, Vinylpropionat, Vinylchlorid und/oder Vinylidenchlorid eingesetzt werden.

Die radikalische Polymerisation wird üblicherweise in Gegenwart eines Initiators durchgeführt. dabei kann die Intiierung sowohl über eine thermisch spaltbare Verbindung, wie Azoverbindungen und/oder Peroxide, oder über photolytisch spaltbare Verbindungen, wie Benzoine, erfolgen. Weiterhin können alle für diesen Reaktionsmechanismus bekannten Verbindungen verwendet werden. Insbesondere können als Initiatoren Verbindungen bzw. deren Gemische verwendet werden, deren photochemische Anregungszustände und/oder deren Folgeprodukte zur H-Abstraktion oder zur Addition an Doppelbindungen fähig sind und damit eine radikalische Polymerisation auslösen können, wie beispielsweise Benzoinether, Bezilketale, Dibenzoylperoxide, Benzophenone oder Hydrodroxyacetophenone.

Die Reaktion kann in Lösung oder lösemittelfrei durchgeführt werden. Als Lösemittel können u. a. Alkohole, wie 2-Propanol, Isopropanol, 1-Butanol, 2-Butanol, Alomaten, Ester oder Ketone, eingesetzt werden. Vorzugsweise ist das Lösemittel mit bis zu 50 Gew.-% in der Reaktionsmischung enthalten.

Als Reaktionstemperatur können Bereiche zwischen 40 und 150 °C gewählt werden, wenn thermisch spaltbare Initiatoren eingesetzt werden und zwischen -10 und 150 °C im Fall von photolytisch spaltbaren Verbindungen. Die Reaktion ist üblicherweise im Zeitraum innerhalb von 1 bis 15 Stunden, vorzugsweise innerhalb von 3 bis 8 Stunden abgeschlossen. Die Anwendung von Druck bzw. das Arbeitung unter Vakum ist möglich, jedoch nicht bevorzugt.

Eine weitere Variante zur Herstellung der erfindungsgemäßen aminofunktionellen Polyorganosiloxane ist die Umsetzung einer mindestens eine Mercaptogruppe aufweisenden Verbindung der allgemeinen Formel (I), wobei Z Wasserstoff bedeutet, zuerst mit einer Verbindung, ausgewählt aus Methylacrylat, Methylmethacrylat, Ethylacrylat und/oder Ethylmethacrylat, und anschließend mit Verbindungen der allgemeinen Formel H₂N―U―N(R⁴)₂ (IV), wobei R⁴ sowie U die oben angegebene Bedeutung aufweisen. Dabei erfolgt die Umsetzung im ersten Schritt durch radikalische Polymerisation wie oben beschrieben und im zweiten durch Aminolyse. Bezogen auf die allgemeine Formel (I) sind in dem erhaltenen aminofunktionelle Polyorganosiloxan die Struktureinheite (M2) und (M3) nicht vorhanden, d. h. i und j sind 0.

Eventuell ablaufende Umsetzungen der Monomeren mit- bzw. untereinander sind möglich, stören die Herstellung und auch die spätere Verwendung der erfindungsgemäßen aminofunktionellen Polyorganosiloxane jedoch nicht.

Die für die Herstellung der erfindungsgemäßen Polyorganosiloxane als Ausgangstoffe eingesetzten Mercaptosiloxane der allgemeinen Formel (I) 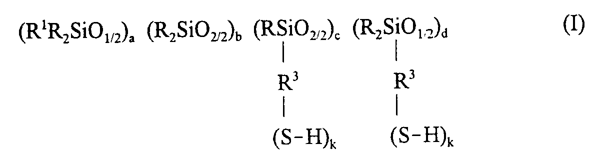 wobei alle Rest und Koefizienten die oben angegeben Bedeutung aufweisen, sowie deren Herstellung sind bekannt. So ist es möglich, sie durch Reaktion von Mercaptopropyldimethoxymethylsilan mit einem Dihydroxyoligodimethylsiloxan oder durch Coäquilibrierung von mercaptopropylhaltigen Siloxancyclen mit trimethylsiloxyterminierten Polydimethylsiloxanen, oder auch durch die Umwandlung von kommerziell erhältlichen Amino- oder Epoxygruppen enthaltenden Siloxanen zu Mercaptosiloxanen zu synthetisieren.

Beispielhaft sollen im folgenden zwei Reaktionen zur Herstellung der mercaptofunktionellen Siloxane dargestellt werden:

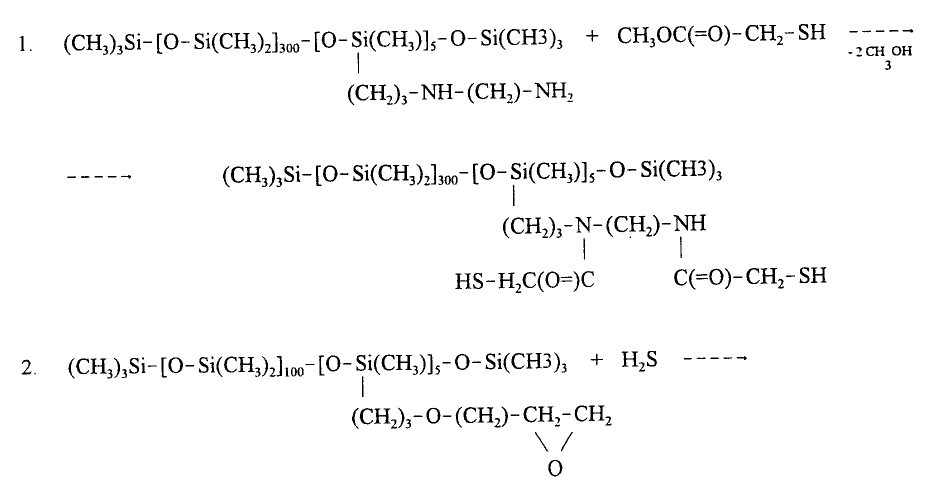

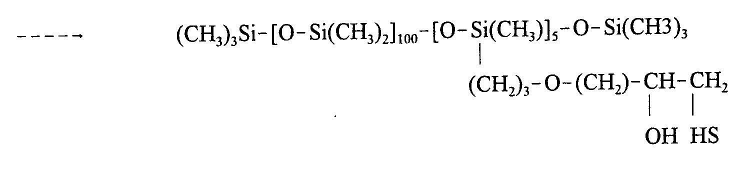

Die erfindungsgemäßen Verbindung können beispielsweise die im folgenden Strukturen aufweisen:

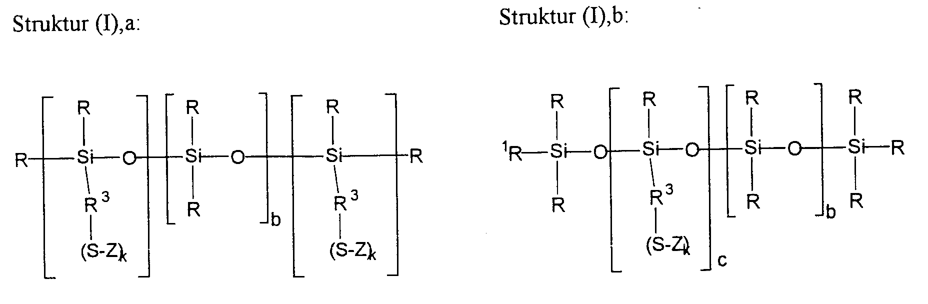

Es können jedoch auch vollkommen problemlos erfindungsgemäße Verbindungen, welche sowohl end- als auch seitenständige aminofunktionelle Gruppierungen Z enthalten, synthetisiert werden.

Die Verwendung der aminofunktionellen Polyorganosiloxane erfolgt bevorzugt in Form wäßriger Zubereitungen, beispielsweise als Emulsionen, welche nach bekannten Verfahren hergestellt werden können.

Anwendungsgebiete für die erfindungsgemäßen Verbindungen sind u. a. die Verwendung als Textilveredlungsmittel oder als Tenside. Weiterhin können sie auch als Bautenschutzmittel, als Zuschlagstoff zu Lacksystemen auf Wasserbasis und in der Körperpflege, beispielsweise als Konditionierer in Haarwaschmitteln angewendet werden.

Auf Grund ihrer Kationogenität, welche durch die Anzahl der Aminogruppen im Molekül bedingt ist, haften die erfindungsgemäßen aminofunktionellen Polyorganosiloxane sehr gut auf Substraten wie Textilien, beispielsweise auf Baumwolle, Polyester oder Polyamid. Die damit ausgerüsteten Textilien sind atmungsaktiv, wasserdurchlässig und reibecht und haben einen deutlich weicheren Griff, als diejenigen Verbindungen, die einen hohen Anteil an Acrylatgruppen und eine geringe Kationogenität aufweisen. Durch die Copolymerisation von andere Funktionalitäten aufweisenden Monomeren können bei den erfindungsgemäßen Siloxanen gezielt Eigenschaften, wie z. B. die Waschpermanenz, positiv beeinflußt werden.

### Ausführungsbeispiele

### I. Herstellung der verwendeten mercaptofuktionellen Siloxane:

### Beispiel S1

125 g Mercptopropyldimethoxymethylsilan (DYNASYLAN 3403, Sivento Chemie GmbH) wurden mit 3.000 g eines hydroxyterminierten Organopolysiloxanes der durchschnittlichen Zusammensetzung HO(Si(CH3)₂O)₂₃H und 0,5 g Schwefelsäure (98 %ig) in einem 4 l Dreihalskolben eingewogen, mit Stickstoff inertisiert und unter Rühren auf 140°C erwärmt. Nach fünf Stunden Reaktionszeit wurde ein Liebigkühler aufgesetzt und bei einem Druck von 780 mbar 100 g Gleichgewichtscyclen abdestilliert. Das so erhaltene Silikonöl war leicht trüb und wies eine Viskosität von 4.000 mPas auf.

### Beispiel S2

In einen 4 l Dreihalskolben wurden 85 g eines Gemisches von [O-Si(CH3)(CH2CH2CH2SH)]ₙ mit n=3 bis 5, 2.500 g eines trimethylsilylendblockierten Polydimethylsiloxanes einer Viskosität von 1.000 mPas und 30 g Tonsil-Katalysator gegeben und unter Stickstoffatmosphäre 20 Stunden bei 90°C gehalten. Das so erhaltene Produkt wurde filtriert und ein klares Öl mit einer Viskosität von 500 mPas erhalten.

### Beispiel S3

In einem 0,25 l Dreihalskolben, ausgestattet mit Rührer, Gaseinleitungsrohr und Gasableitung wurden unter Rühren in eine Mischung aus 0,1 g Diazabicyclooctan und 200 g eines trimethylsilylendblockierten, glycidethermodifizierten Polydimethylsiloxans (Epoxidgehalt: 0.31 mmol Epoxidgruppen/g Siloxan; Viskosität bei25°C: 300 mPas) über einen Zeitraum von zwei Stunden bei 20°C Schwefelwasserstoff eingeleitet. In dem hochviskosen Reaktionsprodukt waren im ¹³C-NMR-Spektrum die beiden Signale bei 50,4 ppm und 43,5 ppm verschwunden und neue Signale bei 30,1 ppm und 76,2 ppm entstanden.

### Beispiel S4

In einem 1 l Dreihalskolben, ausgestattet mit Rührer, Thermometer und Rückflußkühler wurde eine Mischung aus 100 g m-Xylol, 500 g eines mit Aminoethylaminopropyl-Gruppen modifizierten Poldimethylsiloxans (Viskosität bei 25 °C: 534 mPas; 0,68 Gew.-% Stickstoff, trimethylsilylendblockiert) und 35 g Thioglykolsäuremethylester unter Stickstoffatmosphäre für acht Stunden unter Rückfluß bei 150°C gekocht. Anschließend wurde die Reaktionsmischung zwei Stunden bei 150 °C und p=50 mbar entflüchtigt. In dem so erhaltenen hochviskosen und stark gelb gefärbten Siloxan waren titrimetrisch keine Aminogruppen mehr nachweisbar.

### Beispiel S5

In einen 4 l Dreihalskolben wurden 76 g der Verbindung HS(CH₂)₃Si(CH₃)₂OSi(CH₃)₂(CH₂)₃SH, 2.350 g eines Gemisches aus Hexamethyltrisiloxan und Octamethyltetrasiloxan und 25 g Tonsil-Katalysator gegeben und unter Stickstoffatmosphäre 20 Stunden bei 90 °C gehalten. Das so erhaltene Produkt wurde filtriert und zwei Stunden bei 150 °C entflüchtigt. Es wurde ein klares Öl mit einer Viskosität bei 25 °C von 100 mPas erhalten.

### Beispiel S6

In einen 4 l Dreihalskolben wurden 15 g der Verbindung HS(CH₂)₃Si(CH₃)₂OSi(CH₃)₂(CH₂)₃SH, 55 g eines Gemisches von (O-Si(CH3)(CH2CH2CH2SH))ₙ mit n=3 bis 5, 2.300 g eines Gemisches aus Hexamethyltrisiloxan und Octamethyltetrasiloxan und 25 g Tonsil-Katalysator gegeben und unter Stickstoffatmosphäre 20 Stunden bei 90 °C gehalten. Das so erhaltene Produkt wurde filtriert und zwei Stunden bei 150 °C entflüchtigt. Es wurde ein klares Öl mit einer Viskosität bei 25°C von 1900 mPas erhalten.

### II. Herstellung der aminofunktionellen Polyorganosiloxane:

### Allgemeine Verfahrensvarianten

### Variante A:

Das mercaptofunktionelle Siloxan wurde in einem 250 ml Dreihalskolben unter Stickstoffatmosphäre mit den Monomeren, dem Lösungsmittel und dem Initiator versetzt und unter Rühren für acht Stunden bei der angegebenen Temperatur gehalten. Von dem Produkt wurden 100 g mit 1.000 g einer wäßrigen Essigsäurelösung (3 Gew.-%) vermischt und 100 g Flüchtige bei 90°C unter vermindertem Druck abdestilliert.

### Variante B

Das mercaptofunktionelle Siloxan wurde in einem 250 ml Dreihalskolben unter Stickstoffatmosphäre mit den nichtionischen Monomeren, dem Lösungsmittel und dem Initiator versetzt und unter Rühren für acht Stunden bei der angegebenen Temperatur gehalten. Nach einer Stunde wurde das ionische Monomer zugegeben. Von dem erhaltenen Produkt wurden 100 g mit 1.000 g einer wäßrigen Essigsäurelösung (3 Gew.-%) vermischt und 100 g Flüchtige bei 90°C unter vermindertem Druck abdestilliert

### Variante C

Das mercaptofunktionelle Siloxan wurde in einem 250 ml Dreihalskolben unter Stickstoffatmosphäre mit den Monomeren, dem Lösungsmittel und dem Initiator versetzt und unter Rühren für acht Stunden bei der angegebenen Temperatur gehalten. Von dem Produkt wurden 100 g mit 1.400 g einer wäßrigen Essigsäurelösung (3 Gew.-%) vermischt und 400 g Flüchtige bei 90°C unter vermindertem Druck abdestilliert.

### Variante D

In einem 250 ml Dreihalskolben wurden unter Stickstoffatmosphäre 10 Gew.-% des mercaptofunktionellen Siloxanes, die Monomeren, das Lösungsmittel und der Initiator vermischt und die Mischung unter Rühren insgesamt acht Stunden bei der angegebenen Temperatur gehalten. Beginnend nach einer Stunde Reaktionszeit wurden die restlichen 90 Gew.-% des mercaptofunktionellen Siloxanes innerhalb von fünf Stunden gleichmäßig zugetropft. Von dem Produkt wurden 100 g mit 1.000 g einer wäßrigen Essigsäurelösung (3 Gew.-%) vermischt und 100 g Flüchtige bei 90°C unter vermindertem Druck abdestilliert.

### Verfahrensbeispiele V1 bis V21 sowie Veraleichsbeispiele Vgl.1 und Vgl.2

Diese Beispiele wurden in Form einer Tabelle (Tabelle 1) zusammengestellt, welche die eingesetzten Stoffe, die jeweilige Variante, nach der die Herstellung erfolgte, sowie das Aussehen des Produktes enthält.

### Verfahrensbeispiel V22

In einem 1 l Dreihalskolben, ausgestattet mit Rührer, Rückflußkühler und Thermometer wurden 100 g des Produktes aus Beispiel S2 mit 50 g Methylacrylat, 0,3 g Azobis-(isobutyronitril) und 200 g o-Xylol versetzt und anschließend unter Rühren auf 70 °C erwärmt. Einige Minuten nach Erreichen der Reaktionstemperatur stellt man eine deutlich exotherme Reaktion fest, der durch Kühlen des Ansatzes begegnet werden muß. Nach sieben Stunden Reaktionszeit erhält man ein klares, farbloses Produkt, welches aber deutlich viskoser geworden ist als die Ausgangsmischung. Zu diesem Zwischenprodukt werden 100 g 3-Dimethylamino-1-propylamin gegeben und die Mischung für zwanzig Stunden am Siedepunkt bei 150 °C erhitzt. Danach wurde von der Mischung eine Probe entnommen und ein titrierbarer Alminstickstoffanteil von 4,7 Gew.-% ermittelt (entspricht Umsetzungsgrad von 74 %). Der Rückflußkühler wird durch einen Destillationskühler ausgetauscht und das Xylol sowie überschüssiges Amin bei 150 °C unter vermindertem Druck abdestilliert. Nach Beeendigung der Destillation wurde eine zähflüssige, gelbe Paste erhalten. Von dieser wurden 100 g mit 900 g einer wäßrigen Essigsäurelösung (3 Gew.-%) vermischt. Nach einer Stunde Rühren erhielt man eine transluzent durchscheinende, gelblich gefärbte Emulsion.

### Verfahrensbeispiel V23

In einen Reaktor mit Tauchbrenner aus Quarzglas wurden 30 g Dimethylaminopropylacrylat, 100 g Mecaptosiloxan aus Beispiel S2, 50 g 2-Propanol und 1,8 g Dibenzoylperoxid eingewogen, ständig mittels Stickstoffstrom durchmischt und mit einem Thermostaten auf 5 °C gekühlt. Nach 4 Stunden Bestrahlung mit einem 125 W Quecksilberdampfmitteldruckstrahler wurde ein Produkt erhalten, das in einer wäßrigen Essisigsäurelösung (3 Gew.-%) klar löslich ist.

### III. Herstellung von Emulsionen

### Emulsion E1

Von dem Polymerisationsprodukt aus Verfahrensbeispiel V5 wurden 100 g mit 5 g Essigsäure (100 Gew.-%) versetzt und unter Rühren 150 g entmineralisiertes Wasser zugegeben. Von dieser Lösung wurden 150 g Wasser/Lösemittel-Gemisch bei 80°C im Vakuum abdestilliert. Die so erhaltene Emulsion war klar und leicht mit Wasser verdünnbar.

### Vergleichsbeispiel Vgl. 3

15 g eines Siloxanes mit Trimethylsilyl-Endgruppen und Aminoethylaminopropyl-Seitenketten (0,65 Gew.-% Stickstoff Viskosität bei 25°C: 2.100 mPas) wurden mit 10 g eines Isotridexcylpolyethylenglykoles mit durchschnittlich sieben Ethylenoxideinheiten, 1 g Essigsäure (100 Gew.-%) und 15 g Isopropanol solange verrührt, bis eine klare Mischung erhalten wurde. Anschließend wurden insgesamt 69,5 g Wasser in kleinen Portionen unter Rühren in das Gemisch gegeben. Es wurde eine klare bis leicht blaustichige Mikroemulsion erhalten.

### IV. Ausrüstung von Textilien (Anwendungsbeispiele)

### IV.a) Foulardverfahren - Beispiele A1 bis A10

Verwendet wurden
- eine gebleichte, unausgerüstete Baumwollfrotteeware mit 400 g/m² für die Bestimmungen von Weichgriff und Wassereinsinkzeit sowie
- eine rote Baumwollwebware mit 120 g/m² für die Bestimmungen von Reibechtheit und Trockenknittererholungswinkels.
Die Materialien wurden mit der jeweiligen Flotte getränkt, mit einem Zweiwalzenfoulard auf 80 % Flottenaufnahme abgequetscht und bei 120 °C während 10 Minuten getrocknet. Anschließend lag die ausgerüstete Ware mindestens acht Stunden bei Raumtemperatur aus.

In Tabelle 2 sind für die Beispiele A1 bis A10 die verwendeten Produkte und die Ergebnisse der mittels Foulardverfahren ausgerüsteten Stoffe zusammengestellt.

### IV.b) Ausziehverfahren - Beispiele A11 bis A13

Verwendet wurde eine gebleichte, unausgerüstete Baumwollftotteeware mit 400 g/m². Diese wurde in die jeweilige Flotte (Flottenverhältnis 120) eingetaucht, 20 min bei 20 °C belassen, dann herausgenommen und anschließend 10 min bei 120 °C getrocknet sowie mindestens 8 Stunden bei Raumtemperatur ausgelegt.

Folgende Ergebnisse wurden erhalten:

| | Produkt aus Bsp. | Produktmenge, bezogen auf Gewicht Frottestoff in Gew.-% | Weichgriff (Griffbewertung) |
|---|---|---|---|
| Beispiel A11 | V1 | 7,0 | 3 |
| Beispiel A12 | Vgl.1 | 7,2 | 1 |
| Beispiel A13 | Vgl.3 | 2,0 | 2 |

### V. Bestimmungsmethoden für die Ergebnisse der Anwendungsbeispiele

### Bestimmung des Weichgriff (Griffbewertung)

Da der Weichgriff von Textilien stark dem subjektiven Empfinden der Testpersonen unterliegt, kann nur eine Standardisierung der Randbedingungen, nicht aber der Bewertung erreicht werden. Um trotzdem eine Reproduzierbarkeit zu gewährleisten, wurden die ausgerüsteten Muster hinsichtlich ihres Weichgriffs beurteilt und in eine Rangfolge gebracht. Dazu wurden von 10 Personen in Abhängikeit der Anzahl n der getesteten Muster 1 bis n Punkten vergeben, wobei n Punkte für das weicheste Muster und 1 Punkt für das am wenigsten weiche Muster vergeben wurden. In den Tabellen sind die Durchschnittswerte der jeweils auf die einzelnen Muster entfallenen Punkte angegeben.

### Bestimmung der Wassereinsinkzeit

Das ausgerüstete Muster wurde mindestens acht Stunden zur Akklimatisation an die Luftfeuchtigkeit belassen, dann wurde ein Tropfen entionisiertes Wasser daraufgegeben und die Zeit bestimmt bis der Wassertropfen vom Stoff aufgesaugt war, längstens jedoch drei Minuten. Es wurden fünf Bestimmungen durchgeführt und der Mittelwert gebildet.

### Bestimmung der Reibechtheit

Die Bestimmungen wurden entsprechend der Norm EN ISO 105-X12 und 105-A03 mit einer roten Baumwollwebware durchgeführt.

### Bestimmung der Flottenstabilität

Um die Stabilität von Organopolysiloxanemulsionen gegen Alkalien in Ausrüstungsflotten zu prüfen wurde der folgende Test durchgeführt:
Es wurden die Flotten entsprechend der angegebenen Rezeptur in einem 1000 ml Becherglas angesetzt und mit Natriumhydroxidlösung (10 Gew.-%) auf pH-Wert 10 eingestellt. Anschließend wurde die Flotte zwanzig Minuten mit einem Flügelrührer bei zweitausend Umdrehungen pro Minute gerührt. Nach dem Ablauf dieser Zeit stellte man den Rührer ab, ließ den entstandenen Schaum zerfallen und beurteilte die Flüssigkeitsoberfläche hinsichtlich Abscheidungen nach weiteren fünfzehn Minuten.
- Bewertung:: 1 keinerlei Abscheidungen oder Trübung
2 Trübung der Flotte hat sich verstärkt
3 Ölfilm ist auf der Oberfläche sichtbar
4 Öltropfen und Abscheidungen sind sichtbar

Bei den Emulsionen, die Abscheidungen oder einen Ölfilm aufweisen, besteht in der Textilveredelungspraxis die Gefahr, daß es beim Einschleppen von Alkalien in die Ausrüstungsflotte zu einer Zerstörung der Emulsion kommt und dies zu Walzenbelägen und Flecken auf der Ware führt.

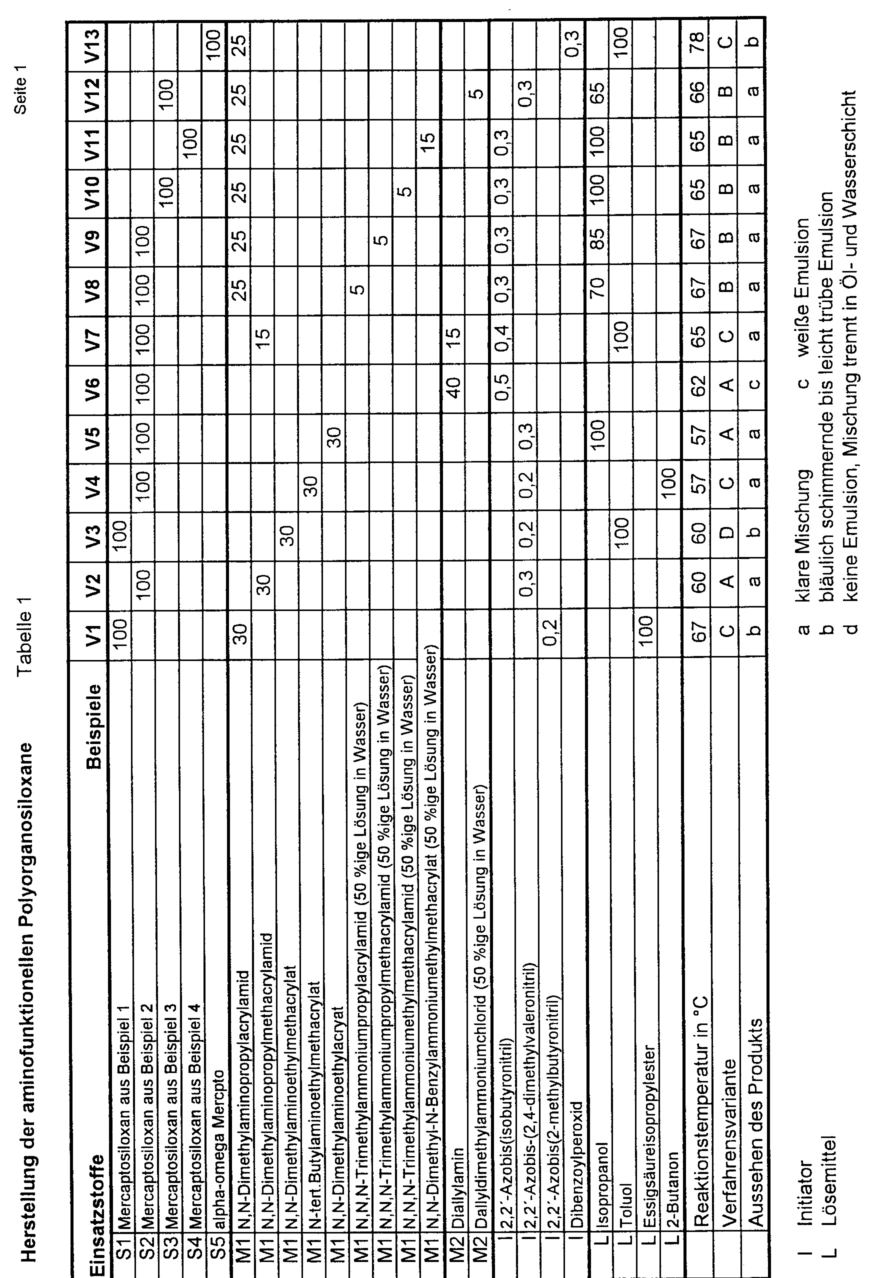

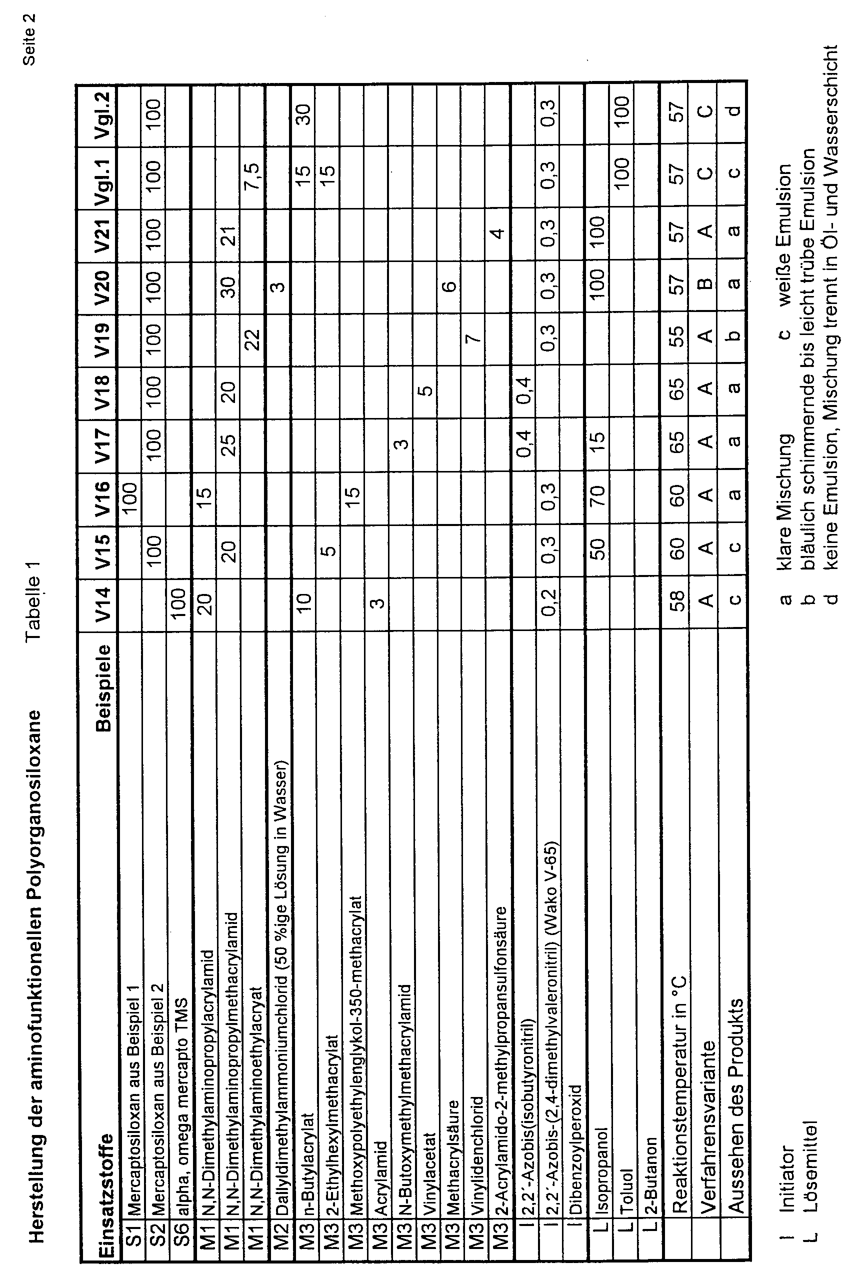

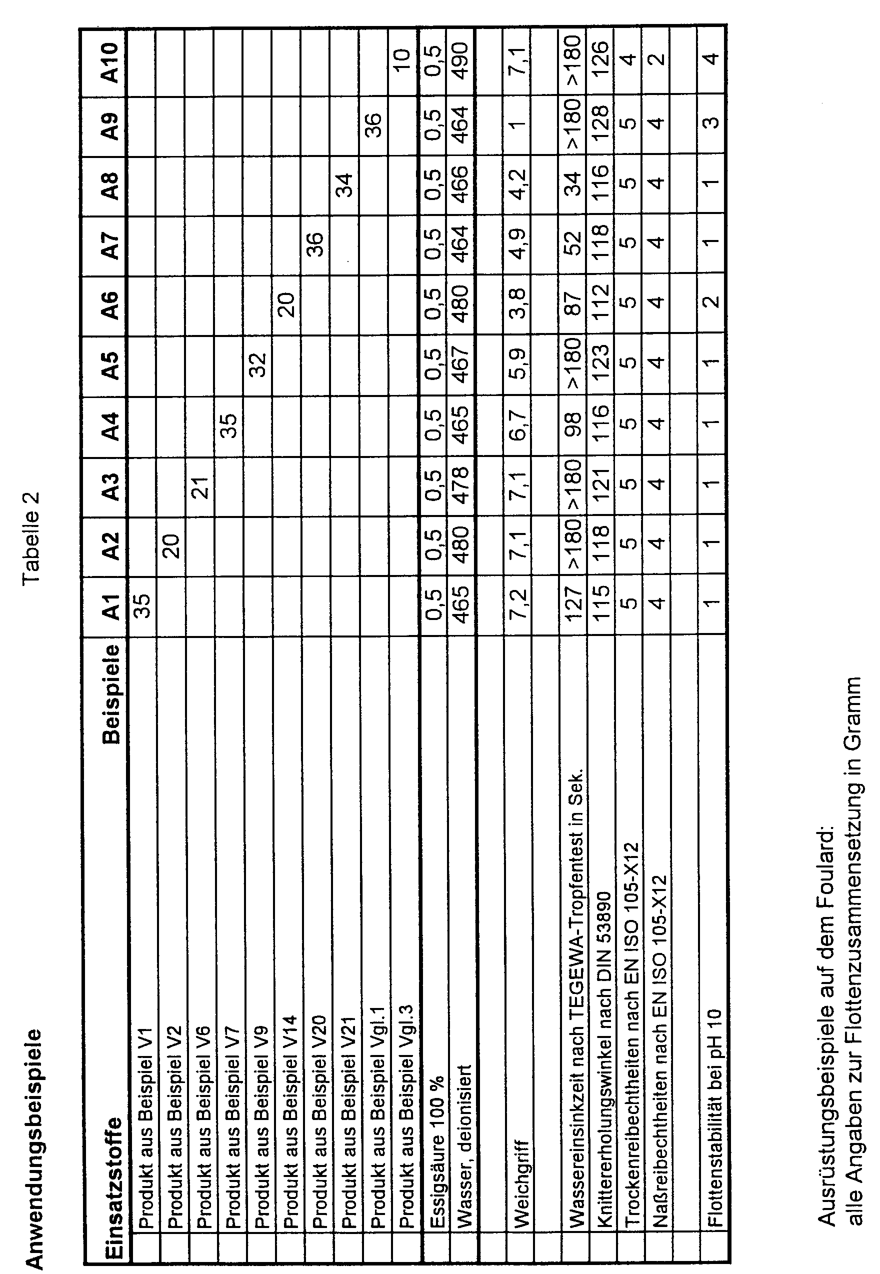

## Patentansprüche

1. Aminofunktionelle Polyorganosiloxane der allgemeinen Formel (I) 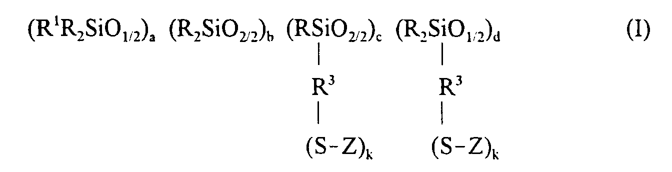 worin R¹ unabhängig voneinander entweder Alkyl-, Aryl-, Alkoxy- oder Hydroxyreste, R unabhängig voneinander, gleiche oder verschiedene, substituierte oder unsubstituierte Alkyl-, Aryl- oder Alkylarylreste sowie R³ unabhängig voneinander ein linearer oder verzweigter, substituierter oder unsubstituierter, durch Heterogruppierungen unterbrochener oder nicht unterbrochener Alkylenrest mit 2 bis 10 Kohlenstoffatomen bedeutet, b Werte von 50 bis 1.000 und c Werte von 1 bis 100 sowie a und d jeweils Werte von 0 bis 2 annehmen, mit der Maßgabe, daß die Summe aus (a+d) maximal 2 ist, und k entweder 1 oder 2 ist,
und Z der Struktur der Formel (II)
(M1) (M2) (M3) H (II)
entspricht, wobei (M1) eine Struktureinheit, ausgewählt aus 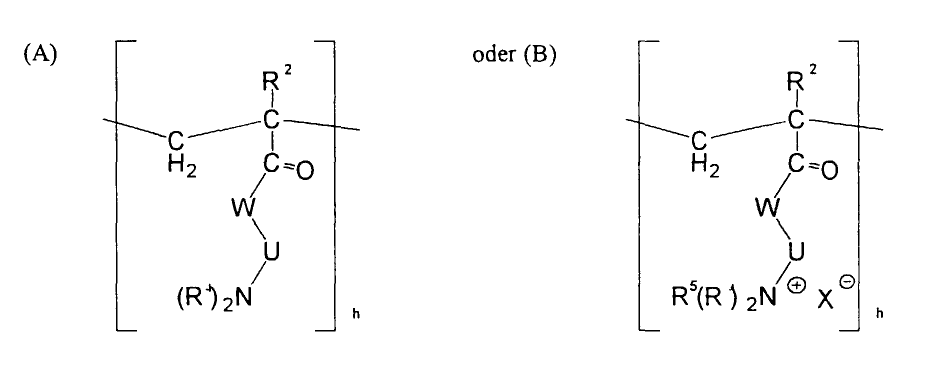 darstellt, worin W eine -NR²- oder -O-Gruppierung, U eine lineare oder verzweigte Alkylengruppe mit 2 bis 10 Kohlenstoffatomen, X^{⊖} ein in wäßriger Lösung stabiles, negativ geladenes Ion, R² unabhängig voneinander Alkylreste mit 1 bis 4 Kohlenstoffatomen oder Wasserstoff, R⁴ unabhängig voneinander substituierte oder unsubstituierte Alkyl-, Aryl- oder Alkylarylreste mit 1 bis 10 Kohlenstoffatomen sowie R⁵ unabhängig voneinander substituierte oder unsubstituierte, gesättigte oder ungesättigte Alkyl-, Aryl- oder Alkylarylreste mit 1 bis 10 Kohlenstoffatomen oder Wasserstoff darstellen, und h Werte zwischen 0 und 250 annimmt,
(M2) eine Struktureinheit, ausgewählt aus 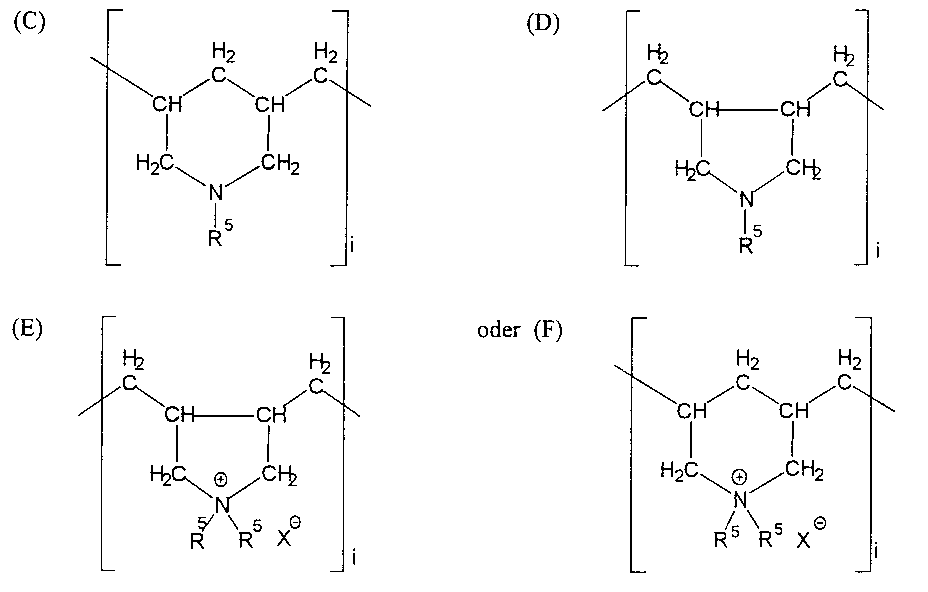 darstellt, wobei R⁵ die oben angegebene Bedeutung aufweist und i Werte zwischen 0 und 400 annimmt,
sowie (M3) eine Struktureinheit, ausgewählt aus 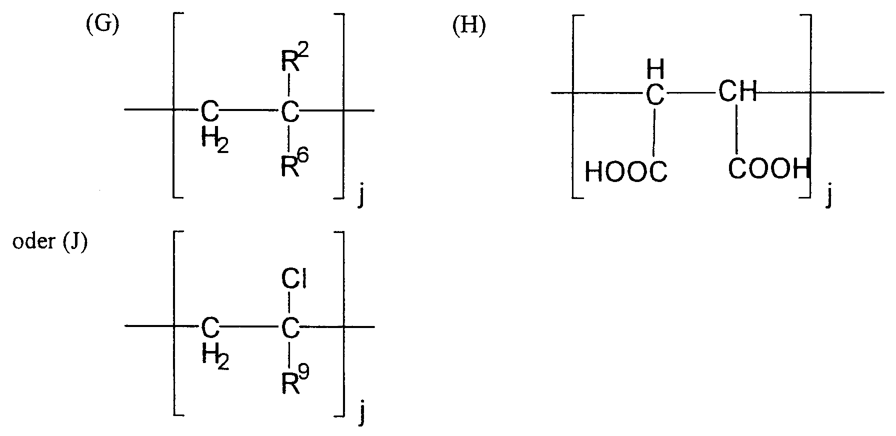 darstellt, wobei R⁶ eine ―COOR⁷- oder ―CONR²-R⁸-, Ethylen- oder Phenyl-Gruppierung darstellt, wobei R⁷ einen linearen oder verzweigten Alkylrest mit 1 bis 18 Kohlenstoffatomen, Hydroxyalkylrest mit 2 bis 5 Kohlenstoffatomen, Alkoxypolyethylenglykolrestemit Molgewichten von 73 bis 1.000 g/mol oder eine Hydroxygruppe darstellt und R⁸ eine Hydroxymethylen- oder methylenetherrest, ein 2-Methylpropansulfonsäurerest oder Wasserstoff bedeutet und R⁹ Wasserstoff oder Chlor darstellt sowie j Werte zwischen 0 und 200 annimmt, mit der Maßgabe, daß die Summe (h+i) immer größer (2·j) ist.

2. Aminofunktionelle Polyorganosiloxane nach Anspruch 1, dadurch gekennzeichnet, daß in der Verbindung der allgemeinen Formel (I) der Rest R ein Methyl- und/oder Ethylrest ist.

3. Aminofunktionelle Polyorganosiloxane nach Anspruch 1, dadurch gekennzeichnet, daß in der Verbindung der allgemeinen Formel (I) der Rest R¹ ein Methyl-, Ethyl-, Hydroxy-, Methoxy- und/oder Ethoxyrest ist.

4. Aminofunktionelle Polyorganosiloxane nach Anspruch 1, dadurch gekennzeichnet, daß in der allgemeinen Formel (I) der Rest R³ einen mit Hydroxy-, Halogen- oder Alkoxygruppen substituierten Alkylenrest mit 1 bis 10 Kohlenstoffatomen darstellt

5. Aminofunktionelle Polyorganosiloxane nach Anspruch 1, dadurch gekennzeichnet, daß in der allgemeinen Formel (I) der Rest R³ einen Alkylenrest mit 1 bis 10 Kohlenstoffatomen darstellt. der unterbrochen ist durch Heterogruppierungen, ausgewählt aus Ether-, Thioether-, Amino-, Carboxyl-, Carbamid- und/oder Sulfonamidgruppen.

6. Aminofunktionelle Polyorganosiloxane nach Anspruch 1, dadurch gekennzeichnet, daß der Alkylenrest R³ in der allgemeinen Formel (I) durch ein oder zwei Heterogruppierungen unterbrochen wird.

7. Aminofunktionelle Polyorganosiloxane nach Anspruch 1, dadurch gekennzeichnet, daß in der Verbindung der allgemeinen Formel (I) der Rest R³ keine leicht hydrolysierbaren, keine ungesättigten und/oder keine Protonen abspaltenden Gruppierungen enthält.

8. Aminofunktionelle Polyorganosiloxane nach Anspruch 1, dadurch gekennzeichnet, daß in der Verbindung der allgemeinen Formel (I) der Rest R³ eine Propylen-, 2-Methylpropylen, Butylen-, Decanylengruppierung und/oder eine 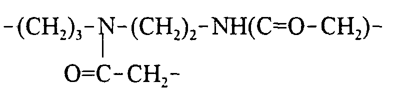 Gruppierung bedeutet.

9. Aminofunktionelle Polyorganosiloxane nach Anspruch 1, dadurch gekennzeichnet, daß in der Verbindung der allgemeinen Formel (I) b Werte zwischen 90 und 800 annimmt.

10. Verfahren zur Herstellung der aminofunktionellen Polyorganosiloxane nach Anspruch 1, dadurch gekennzeichnet, daß eine mindestens eine Mercaptogruppe aufweisende Verbindung der allgemeinen Formel (I), wobei Z Wasserstoff bedeutet, mit den, die Struktureinheiten (M1), (M2) und/oder (M3) bildenden, entsprechenden Verbindungen M1, M2 und M3 in Gegenwart eines Initiators umgesetzt wird.

11. Verfahren zur Herstellung der aminofunktionellen Polyorganosiloxane nach Anspruch 10, dadurch gekennzeichnet, daß die Verbindung M1 ausgewählt ist aus Aminoalkylacrylacten und/oder -methacrylaten, Aminoalkylacrylamiden und/oder Aminoalkylmethacrylamiden und/oder deren Ammoniumverbindungen.

12. Verfahren zur Herstellung der aminofunktionellen Polyorganosiloxane nach Anspruch 10, dadurch gekennzeichnet, daß die Verbindung M2 ausgewählt ist aus Diallylaminen und Diallylammoniumverbindungen.

13. Verfahren zur Herstellung der aminofunktionellen Polyorganosiloxane nach Anspruch 10, dadurch gekennzeichnet, daß die Verbindung M3 ausgewählt ist aus Alkylacrylaten, Alkylmethacrylaten, methylolierte Acryl- und Methacrylamide und deren Alkylether, Acylsäuren und Methacrylsäuren, Maleinsäure und deren Anhydrid, Fumarsäure, Itaconsäure, 2-Acrylamido-2-methylpropansulfonsäure, Vinylacetat, Vinylpropionat, Vinylchlorid und/oder Vinylidenchlorid.

14. Verfahren zur Herstellung der aminofunktionellen Polyorganosiloxane nach Anspruch 10, dadurch gekennzeichnet, daß als Initiator thermisch spaltbare Azoverbindungen und/oder Peroxide eingesetzt werden.

15. Verfahren zur Herstellung der aminofunktionellen Polyorganosiloxane nach Anspruch 10, dadurch gekennzeichnet, daß als Initiator photolytisch spaltbare Benzoine eingesetzt werden.

16. Verfahren zur Herstellung der aminofunktionellen Polyorganosiloxane nach Anspruch 1, dadurch gekennzeichnet, daß die mindestens eine Mercaptogruppe aufweisende Verbindung der allgemeinen Formel (I), wobei Z Wasserstoff bedeutet, zuerst mit einer Verbindung, ausgewählt aus Methylacrylat, Methylmethacrylat, Ethylacrylat und/oder Ethylmethacrylat, und anschließend mit Verbindungen der allgemeinen Formel H₂N―U―N(R⁴)₂ (IV) umsetzt, wobei R⁴ sowie U die oben angegebene Bedeutung aufweisen.

17. Verwendung der aminofunktionellen Polyorganosiloxane nach Anspruch 1 in Form wäßriger Zubereitungen.

18. Verwendung der aminofunktionellen Polyorganosiloxane nach Anspruch 1 als Textilveredlungsmittel.

19. Verwendung der aminofunktionellen Polyorganosiloxane nach Anspruch 1 als Tenside.
